# EUROPEAN PATENT APPLICATION

(11) **EP 4 840 892 A1**
(43) Date of publication of application: **18.11.2026**
(21) Application number: 25176237.3
(22) Date of filing: 13.05.2025
(51) Int. Cl.: C08G 18/12, C08G 18/22, C08G 18/36, C08G 18/42, C08G 18/75, D06P 5/00

(54) **A WATER-BASED POLYURETHANE DISPERSION**

(71) Applicant: CHT Turkey Kimya Sanayi ve Ticaret A.S., 34522 Istanbul (TR)
(72) Inventor: SENADA KARABULUT, Seher, 34522 Istanbul (TR); AKANSEL, Yagmur, 34522 Istanbul (TR)
(74) Representative: Bakirci, Utkan Bahri

(57) **Abstract**

This invention relates to a method for producing water-based polyurethanes, which exhibit excellent adhesion, flexibility, and stability. The method involves forming a prepolymer using specific bio-based and petroleum-based polyols, followed by the introduction of cationic groups through chemical modification. The resulting water-based polyurethane is particularly suitable for digital printing on cotton fabrics, ensuring high-quality prints with superior durability and adhesion. Additionally, polyurethanes produced by this method and cotton fabrics printed with these polyurethanes are also within the scope of the invention.

## Description

### Technical Field of the Invention:

The present invention relates to a novel water based polyurethane dispersion being cationic and biobased. The present invention also relates to a sustainable method for producing said polyurethane dispersion.

### Background of the Invention:

Polyurethanes are a versatile class of polymers that are widely used in various applications due to their diverse properties. They are typically formed by the reaction of polyols and isocyanates. Polyols are compounds with multiple hydroxyl (-OH) groups. They can be classified into two main types: polyether polyols and polyester polyols. Polyether polyols are derived from the polymerization of alkylene oxides such as ethylene oxide or propylene oxide. They provide flexibility and good mechanical properties to the polyurethane. Polyester polyols are produced from the reaction of dibasic acids (e.g., adipic acid) with glycols (e.g., ethylene glycol), these polyols impart rigidity and resistance to chemicals and abrasion to the final polymer. Isocyanates are compounds that contain one or more isocyanate groups (-NCO). The most common types used in polyurethane production are toluene diisocyanate (TDI) and methylene diphenyl diisocyanate (MDI). Aromatic isocyanates such as TDI and MDI, are widely used due to their reactivity and suitability for various applications whereas aliphatic isocyanates are used for applications requiring UV resistance and stability, such as coatings and elastomers.

The formation of polyurethane involves a polyaddition reaction between polyols and isocyanates. This reaction can be simplified as follows:

Polyol + Isocyanate => Polyurethane

In the first step of the reaction urethane linkages are formed. The hydroxyl groups (-OH) of the polyol react with the isocyanate groups (-NCO) to form urethane linkages (-NH-CO-O-). In the second step additional reactions can occur between isocyanate groups and urethane linkages or with water (producing urea linkages), leading to a crosslinked polymer network. This crosslinking enhances the mechanical strength and thermal stability of the polyurethane.

Water-based polyurethanes (WBPU) are an environmentally friendly alternative to solvent-based polyurethanes. They offer several advantages, including lower volatile organic compound (VOC) emissions, improved safety, and reduced environmental impact. Water-based polyurethanes are typically synthesized through the following steps:
Prepolymer Formation: A polyurethane prepolymer is formed by reacting a diisocyanate (e.g., TDI or MDI) with a polyol (e.g., polyether or polyester polyol). The reaction is controlled to ensure that the prepolymer has isocyanate end groups.

Chain Extension and Dispersion: The prepolymer is then dispersed in water with the help of surfactants or emulsifiers. During this step, a chain extender (e.g., a diamine or diol) is added to react with the isocyanate groups, forming a high molecular weight polymer. Neutralizing agents (e.g., triethylamine) may be used to stabilize the dispersion.

Formation of Colloidal Dispersion: The resulting mixture is a colloidal dispersion of polyurethane particles in water. This dispersion can be adjusted to achieve the desired viscosity and solids content.

Water-based polyurethanes (WBPU)) exhibit a range of properties that make them suitable for various applications. First of all, due to the absence of organic solvents, WBPU formulations have significantly lower VOC emissions, contributing to better air quality and safer working conditions. Secondly, WBPU provides excellent adhesion to a variety of substrates, including metals, plastics, and textiles. They also offer good mechanical properties, including flexibility, abrasion resistance, and toughness. Additionally, WBPU coatings and films have good resistance to chemicals and water, making them suitable for protective applications.

Digital printing on polyester fabric is a modem textile printing process that utilizes digital technology to apply designs directly onto polyester materials. This method offers high precision, flexibility, and the ability to produce vibrant, detailed prints. The process of digital printing on polyester begins with creating a digital design using graphic design software. This design is prepared and formatted to be compatible with the digital printing equipment. Polyester fabric often requires pre-treatment to ensure optimal ink absorption and adhesion. This can involve applying a coating or using heat to prepare the fabric surface. In direct to fabric (DTF) printing method, the design is printed directly onto the polyester fabric using specialized digital printers equipped with sublimation or direct disperse inks. Sublimation printing is the most common method for polyester. Sublimation inks, which are water-based and contain dye, are printed onto a transfer paper. The printed paper is then placed on the polyester fabric, and heat and pressure are applied using a heat press. The heat causes the dye to sublimate (turn from solid to gas) and penetrate the fabric fibers, resulting in a vibrant, permanent print. Direct disperse printing method uses disperse dyes that are directly applied to the fabric without the need for transfer paper. The fabric is then heated to fix the dye. After printing, the fabric may undergo posttreatment processes such as steaming or heat-setting to ensure the print is fully fixed and durable. This step enhances colorfastness and washability.

Polyurethanes are used in various aspects of the textile and digital printing industry due to their versatile properties. They can be used as coatings and finishes. Polyurethane coatings are applied to fabrics to make them waterproof and more durable. This is particularly useful for outdoor textiles, sportswear, and activewear. Polyurethane coatings protect printed designs on fabrics from abrasion, UV light, and chemical damage. This helps maintain the vibrancy and longevity of digital prints. Coatings improve the fabric's resistance to wear and tear, extending the lifespan of textiles used in demanding environments. They can also be employed as adhesives. Polyurethane adhesives are used to laminate different layers of fabric or to bond decorative elements to textiles. This is important in the production of composite fabrics used in banners, upholstery, and fashion items. Polyurethane-based heat transfer films are used in the digital printing process to transfer designs onto fabrics. These films provide excellent adhesion and flexibility, ensuring that the transferred design adheres well to the fabric and maintains its integrity through washing and wear.

However, these mentioned techniques, generally applied to polyester fabrics, can be difficult to apply to cotton fabrics. Even when applied, the desired results in terms of color vibrance are not achieved. Digital prints applied to cotton fabrics are not as vibrant in color as those applied to polyester fabrics. In other words, the colors on cotton fabrics appear dull and faded. This is due to the different chemical and physical properties of cotton fabrics.

When working with digital printing on cotton fabrics, in addition to the issue of color vibrancy, another problem is the technical application difficulty. Polyester fabrics absorb the dye better during printing, while on cotton fabrics, the dye does not penetrate the fibers sufficiently and does not distribute evenly on the surface. This negatively impacts the vibrancy and durability of the colors.

In the state of the art, the use of polyurethane-based compositions and methods for digital printing on fabrics is widely known. Document EP3172376A1 discloses the use of an acrylic latex-based base coating composition applied to woven textile materials comprising synthetic resin fibers prior to digital printing. According to this method, digital inks can be applied directly onto the base coating while it is still wet, thus shortening the overall processing time. However, although this technique provides advantages when applied to synthetic materials such as polyester fabrics, it does not yield the desired results on cotton fabrics. Due to the differing chemical and physical properties of cotton fibers, digital prints made with the method described in EP3172376A1 do not achieve sufficient dye penetration on cotton fabric surfaces. This leads to dull and faded print appearances, resulting in a significant loss of color vibrancy.

Similarly, patent document US2015299948A1 discloses pretreatment compositions comprising aqueous cationic polyurethane dispersions combined with reactive crosslinkers, coagulating acids, and polyvalent metal ions for digital printing on substrates such as textiles and garments. However, when these polyurethane dispersions are applied to textile surfaces made from natural fibers such as cotton, they exhibit inadequate dye fixation and penetration properties. Consequently, the desired color vibrancy and durability of digital prints on cotton-based fabrics cannot be effectively achieved with this known composition.

In this regard, there is a need to develop digital printing techniques on cotton fabrics to improve dye fixation, resulting in higher color yield.

In recent years, research has focused on developments of bio-based polyols and isocyanates to produce more sustainable WBPU formulations. The production of water-based polyurethanes (WBPU) can incorporate bio-based raw materials, which are derived from renewable resources. These bio-based raw materials help reduce the dependency on fossil fuels and lower the environmental impact of polyurethane production.

Bio-based polyols can be derived from various renewable sources like vegetable oils such as soybean oil, castor oil and palm oil, natural sugars and carbohydrates such as sucrose and glucose/ sorbitol, lignin and glycerol.

### Detailed Description of The Invention:

The present invention relates to a water-based polyurethane dispersion being cationic and biobased, to be used in digital printing in cotton fabrics.

It is an object of the present invention to get high saturation and achieve vibrant colors in digital printing in cotton fabrics, without the need for any polyester interlining film. In line with this aim, a novel water-based polyurethane dispersion has been developed.

The present invention is generally related to a water-based polyurethane and a method thereof. The method of obtaining polyurethane of the present invention also comprises basically two steps: the first step involves the addition of isocyanates, and the second step involves the addition of bio-based polyols.

In an embodiment of the invention, the bio-based polyol may be castor oil, grape seed oil, corn oil, canola oil, rice bran oil, linseed oil, soybean oil, olive oil, coconut oil, palm oil, sesame oil, cottonseed oil, sunflower oil, or a mixture of one or more thereof.

Castor oil is a vegetable oil obtained from the seeds of the castor oil plant. It has been used in the industry for a long time due to its unique chemistry and beneficial properties. In the recent times where sustainability is the main goal its renewable nature and biodegradability make it even more significant. Castor oil plants are cultivated in tropical and subtropical regions. The seeds, commonly known as castor beans, are harvested when they are ripe. The oil is extracted from the seeds through mechanical pressing (cold pressing) or by using solvents. Cold pressing is preferred for producing high-quality, pure castor oil without chemical residues. The extracted oil is then filtered and purified to remove impurities and achieve the desired quality.

Castor oil is a triglyceride, meaning it consists of a glycerol molecule bound to three fatty acid chains. Castor oil is unique among vegetable oils due to its high content (about 85-90%) of ricinoleic acid which is a monounsaturated fatty acid with hydroxyl groups. It also contains linoleic acid, oleic acid, and small amounts of stearic and palmitic acids. It has been used for long in order to produce polyurethanes. Castor oil with its high content of hydroxyl groups due to the presence of ricinoleic acid, serves as a versatile polyol in the synthesis of polyurethanes and it can also be used in cationic polyurethane production. Cationic polyurethanes are type of polyurethanes that carry a positive charge, which makes them useful in various applications, including coatings, adhesives, and textile treatments, where adhesion to negatively charged surfaces is desirable.

Thus, in a preferred embodiment of the invention, the bio-based polyol is castor oil. In this embodiment, the water based polyurethane dispersion comprises 40 to 50 % by weight of castor oil. In further embodiments, the water-based polyurethane dispersion comprises 42 to 48% or 45 to 49% by weight of castor oil.

Castor oil is commonly used in anionic or non-ionic polyurethane production however it has also been possible to adapt this versatile polyol for use in cationic polyurethane production. To produce cationic polyurethanes, castor oil-based polyols can be chemically modified to introduce cationic groups. This may be done by incorporating cationic monomers or by post-polymerization modification. Cationic groups such as quaternary ammonium salts may also be incorporated into the polyurethane structure by reacting tertiary amine-containing compounds with the polymer which should be followed by quaternization. Accordingly, the first step of the method of present invention requires the synthesis of a prepolymer. Castor oil is reacted with one or more of the diisocyanates selected from the list comprising toluene diisocyanate (TDI) and methylene diphenyl diisocyanate (MDI), isophorone diisocyanate (IPDI), and hexamethylene diisocyanate (HDI) to form a prepolymer. In the next step, cationic groups are introduced into the prepolymer. This can be done by reacting the prepolymer with compounds that contain tertiary amine groups, followed by a quaternization reaction to convert these into quaternary ammonium groups. Finally, the polymer chain is extended or crosslinked by using chain extenders or cross linkers that may also contain cationic functionalities to further enhance the cationic nature of the polyurethane.

In an embodiment of the present invention, dimethyl ethanol amine (DMEA) imparts cationic groups to the polyurethane through its amine functionality. DMEA contains a tertiary amine group and a hydroxy group. During the polymerization process, the hydroxy group reacts with isocyanate groups to form urethane linkages, incorporating DMEA into the polyurethane chain. The tertiary amine group of DMEA can be further modified by the quaternization process wherein the tertiary amine is reacted with an alkylating agent, selected from the list comprising methyl iodide, benzyl chloride, and ethyl bromide, to form a quaternary ammonium compound. This reaction introduces a cationic group i.e. a positive charge to the polymer. Thus, when incorporated into the polyurethane backbone, the quaternized DMEA imparts cationic charges to the polymer. This modification makes the resulting polyurethane cationic, which means that it has positive charges enabling it to interact with negatively charged surfaces of substances.

Another polyol used is a petroleum-derived polyol. It may be a single type of petroleum-derived polyol or a mixture thereof.

Petroleum-derived polyols include polyether polyols and polyester polyols. Polyether polyols are synthesized through the polymerization of alkylene oxides such as ethylene oxide (EO) and propylene oxide (PO), with common types being polypropylene glycol (PPG) and polytetramethylene ether glycol (PTMEG). Polyester polyols are produced via the esterification of dicarboxylic acids like adipic acid or phthalic anhydride with diols such as ethylene glycol or 1,4-butanediol, with notable variants being adipate-based and phthalate-based polyols. Additionally, aromatic polyols like Mannich-based polyols and novolac polyols, derived from aromatic compounds such as TDI and MDI derivatives, are used for applications requiring enhanced rigidity and thermal stability.

In one embodiment of the invention, petroleum-based polyol used may be polyester diol (Poly 1,4-butylene adipate), PPG (Polypropylene Glycol), PTMEG (Polytetramethylene Ether Glycol), PEG (Polyethylene Glycol), PCL (Polycaprolactone), PC (Polycarbonate) or a mixture thereof.

PPG (Polypropylene Glycol) is derived from propylene oxide, which is produced from propylene, a byproduct of petroleum refining. PTMEG (Polytetramethylene Ether Glycol) is derived from tetrahydrofuran (THF), which is produced from butadiene, a petroleum derivative. PEG (Polyethylene Glycol) is derived from ethylene oxide, which is produced from ethylene, another petroleum derivative. PCL (Polycaprolactone) is derived from the polymerization of ε-caprolactone, which is produced from cyclohexanone, a compound derived from petroleum.

The biodegradability of polycaprolactone contributes significantly to the environmental compatibility of the present invention, making it particularly suitable for sustainable textile printing applications.

In an embodiment of the invention, recycled polyols based on petroleum-derived polyols are used either alone or in combination with the above-mentioned polyols, to enhance sustainability and reduce the environmental impact of polyurethane manufacturing. The recycled polyols can be post-consumer recycled polyols or post-industrial recycled polyols.

In an embodiment, the bio-based polyol is selected from the group of castor oil, grape seed oil, corn oil, canola oil, rice bran oil, linseed oil, soybean oil, olive oil, coconut oil, palm oil, sesame oil, cottonseed oil, sunflower oil, or a mixture of one or more thereof, and the petroleum-based polyol used is selected from the group of polyester diol (poly 1,4-butylene adipate), PPG (polypropylene glycol), PTMEG (polytetramethylene ether glycol), PEG (polyethylene glycol), PCL (polycaprolactone), PC (polycarbonate) or a mixture of one or more thereof.

In an embodiment, the petroleum-based polyol has a molecular weight of 1000 to 2000 g/mol.

In an embodiment, the petroleum-based polyol used is hexanedioic acid 1,4-butanediol polymer.

In an emboiment, the mass ratio of castor oil to petroleum-based oil is below 2:3, preferably 1:4 to 2:3.

In an embodiment of the invention the bio-based polyol is castor oil and the petroleum derived polyol is polycaprolactone. Castor oil and polycaprolactone (PCL) can be suitably used together in a polyurethane dispersion formulation and it has been found out that they complement each other, especially in applications like digital printing on cotton fabrics. The weight ratio of castor oil to polycaprolactone can range from 1:1 to 2:1, preferably 1.3:1 to 1.7:1 depending on the targeted flexibility, hydrophobicity, and mechanical properties of the resulting polyurethane dispersion.

In one embodiment of the invention, the molecular weight of the used petroleum-based polyol is between 500-10.000 g/mol, preferably between 1000-2000 g/mol.

In one embodiment of the invention, the bio-based polyol is castor oil and the petroleum derived oil is polyester diol having 1000 g/mol molecular weight.

In a preferred embodiment of the invention, the source of cationic groups is DMEA (dimethyl ethanol amine). The functionalization agent which is used for cationic polyurethane polymerization process of the present invention, enhances the vibrancy of colors. In other words, the higher the cationic level, the higher the vibrancy of the colors.

The invention, in its most general form, relates to a method for preparing a water-based polyurethane dispersion, which comprises the following process steps:
- forming a prepolymer by introducing into a reaction vessel under agitation,
   i. a di-isocyanate compound,
   ii. 40 to 50 % by weight of at least one bio-based polyol and
   iii. at least one petroleum-based polyol having molecular weight of 500 to 10.000 g/mol,
- heating the mixture while stirring continuously to initiate the reaction between the polyols and diisocyanate,
- introducing dimethyl ethanol amine (DMEA) into the reaction mixture to introduce cationic groups, and
- cooling and neutralizing the resulting tertiary amine groups with an alkylating agent to form quaternary ammonium groups;
- emulsifying the mixture in water under high shear conditions to form a stable dispersion;
- removing any solvents from the dispersion by vacuum stripping,
- adjusting the pH of the dispersion to achieve desired stability and properties.

In an embodiment of the invention, the diisocyanate used is isophorone diisocyanate.

In an embodiment, acetic acid is used to neutralize the tertiary amine groups (introduced by N,N-Dimethylethanolamine) to form quaternary ammonium groups.

The quaternary ammonium groups are formed by the reaction of N,N-Dimethylethanolamine (DMEA) with an alkylating agent. This process involves the quaternization of the tertiary amine group in DMEA to form quaternary ammonium compounds. N,N-Dimethylethanolamine (DMEA) is used to introduce cationic groups into the polyurethane. It reacts with isocyanate groups to form urethane linkages and incorporates tertiary amine functionality into the polymer chain. This tertiary amine can then be quaternized with an alkylating agent to form quaternary ammonium groups, which provides a positive charge, enhancing the cationic nature of the polyurethane.

In an embodiment of the present invention, 1,4-Butanediol which is a linear aliphatic diol is used as a chain extender. It reacts with diisocyanates to form long polymer chains, enhancing the mechanical properties such as flexibility, tensile strength, and durability of the final polyurethane material. In the described method, it plays a critical role in forming the polyurethane prepolymer and contributing to the desired properties of the water-based polyurethane dispersion.

In a further embodiment of the invention, dipropylene glycol dimethyl ether (DPGDME) is used as an organic solvent to dissolve reactants, reduce viscosity and improve the processability and stability of the formulation.

In one embodiment of the invention, the catalyst is at least one of an organic zinc catalyst and an organic bismuth catalyst, preferably bismuth neodecanoate. In a still further embodiment of the invention, bismuth neodecanoate is used as a catalyst to accelerate the reaction and provide a more efficient polymerization process in the production of polyurethane.

In an embodiment of the invention, sorbitan tristearate which is an ester of sorbitol and stearic acid, is used as emulsifier and stabilizer.

In another embodiment of the invention, nonionic surfactans is used to reduce surface tension, enhance wetting and improve the dispersion of the components. In an embodiment, Lutensol XL 80 is used as nonionic surfactant.

In a further embodiment of the invention, especially in the emulsification step, pre-prepared water and defoamer mixtures are introduced into the reaction vessel under increased stirring speed.

Pre-prepared water refers to water that has been treated or processed before being used such as deionization, distillation, filtration, reverse osmosis or sterilization.

A defoamer, also known as an anti-foaming agent, is a chemical additive used to reduce or eliminate foam formation in the process.

In an embodiment of the invention, the viscosity is less than 250 mPa at 20°C, in a further embodiment the pH is between 5 and 7. In an embodiment, the solid content in the mixture prepared by the method of the invention is around 40%.

In an embodiment of the invention, the method comprises the step of adjusting pH to be between 5 and 7 and adjusting the viscosity to be less than 250 mPa at 20°C.

In one embodiment of the invention, the amine chain extender has a molecular weight of ≤500 g/mol and/or the particle size D90 of the polyurethane dispersion is 160 to 190 nm.

In one embodiment, the method comprises the step of adding a non-ionic diol, to the reaction vessel, after the step of introduction of polyester diol.

In one embodiment, the present invention relates to a method for preparing a water-based polyurethane dispersion having a narrow particle size distribution, comprising the steps of;
- forming a prepolymer by introducing into a reaction vessel under agitation,
   (i) a di-isocyanate compound,
   (ii) 40 to 50 % by weight of at least one bio-based polyol and
   (iii) at least one petroleum-based polyol having 500 to 10.000 g/mol molecular weight,
   (iv) a catalyst,
   heating the mixture while stirring continuously to initiate the reaction between the polyols and diisocyanate and carrying out the reaction until the NCO % value is 3 to 4;
- cooling the prepolymer to 70°C and adding N,N- dimethylethanolamine until the NCO % is 1.4 to 1.8%;
- cooling to 60-65°C and adding acetic acid as neutralizing agent to neutralize the prepolymer into a salt;
- adding an amino-containing emulsifier and reacting with the isocyanate group for 10 to 15 minutes, then adding an amine chain extender and reacting for 5 to 10 minutes;
- adding water for emulsification to obtain an aqueous polyurethane-urea dispersion.

In summary, the present invention provides a method for producing a water-based polyurethane dispersion with excellent adhesion, flexibility, and stability. The process involves forming a prepolymer by reacting polyester diol and non-ionic diol with isophorone diisocyanate in the presence of bismuth neodecanoate as a catalyst. The mixture is then subjected to a series of steps, including the addition of 1,4-butanediol, dipropylene glycol dimethyl ether, and castor oil, followed by the incorporation of sorbitan tristearate and N,N-dimethylethanolamine. The tertiary amine groups introduced by DMEA are subsequently quaternized to form quaternary ammonium compounds, imparting cationic properties to the polyurethane. The resulting polymer is emulsified in water, mixed with a defoamer, and processed to achieve a final dispersion with a viscosity of less than 250 mPa at 20°C, a pH adjusted to between 5 and 7, and a solid content of around 40%. This innovative method ensures the production of high-quality, stable polyurethane dispersions suitable for various applications.

In addition, water-based polyurethanes produced by the method of the invention are also within the scope of the invention. In an embodiment, the water based-polyurethane according to the invention, the solid content is between 30% and 50% when measured at 130°C using an IR dryer.

This water-based polyurethane is used in a method for digital printing on cotton fabrics, resulting in high-quality printed textiles. The invention also includes cotton fabric printed with the water-based polyurethane derived from this method, ensuring excellent adhesion, durability, and print quality. Specifically, the use of the water-based polyurethane in digital printing applications ensures that the printed designs adhere well to cotton fabrics, maintaining their integrity through multiple washes and wear. Furthermore, the invention includes cotton fabrics printed with the water-based polyurethane, resulting in high-quality printed textiles that benefit from the enhanced properties of the innovative polyurethane dispersion. This extends the practical applications of the water-based polyurethane in the textile industry, particularly in digital printing on cotton fabrics.

## Claims

1. A method for preparing a water-based polyurethane dispersion having a narrow particle size distribution, comprising the steps of;
- forming a prepolymer by introducing into a reaction vessel under agitation,
(i) a di-isocyanate compound,
(ii) 40 to 50 % by weight of at least one bio-based polyol and
(iii) at least one petroleum-based polyol having 500 to 10.000 g/mol molecular weight,
(iv) a catalyst,
heating the mixture while stirring continuously to initiate the reaction between the polyols and diisocyanate and carrying out the reaction until the NCO % value is 3 to 4;
- cooling the prepolymer to 70°C and adding N,N- dimethylethanolamine until the NCO % is 1.4 to 1.8%;
- cooling to 60-65°C and adding acetic acid as neutralizing agent to neutralize the prepolymer into a salt;
- adding an amino-containing emulsifier and reacting with the isocyanate group for 10 to 15 minutes, then adding an amine chain extender and reacting for 5 to 10 minutes;
- adding water for emulsification to obtain an aqueous polyurethane-urea dispersion.

2. The method according to claim 1, wherein the bio-based polyol is selected from the group of castor oil, grape seed oil, corn oil, canola oil, rice bran oil, linseed oil, soybean oil, olive oil, coconut oil, palm oil, sesame oil, cottonseed oil, sunflower oil, or a mixture of one or more thereof and the petroleum-based polyol used is selected from the group of polyester diol (poly 1,4-butylene adipate), PPG (polypropylene glycol), PTMEG (polytetramethylene ether glycol), PEG (polyethylene glycol), PCL (polycaprolactone), PC (polycarbonate) or a mixture of one or more thereof.

3. The method according to claims 1 or 2, wherein the petroleum-based polyol has a molecular weight of 1000 to 2000 g/mol.

4. The method according to any one of preceding claims, wherein the petroleum-based polyol used is hexanedioic acid 1,4-butanediol polymer.

5. The method according to any one of preceding claims, wherein the bio-based polyol is castor oil.

6. The method according to claim 5, wherein the mass ratio of castor oil to petroleum-based oil is below 2:3, preferably 1:4 to 2:3.

7. The method according to any one of preceding claims, wherein the catalyst is at least one of an organic zinc catalyst and an organic bismuth catalyst, preferably bismuth neodecanoate.

8. The method according to any one of preceding claims, wherein the di-isocyanate compound is isophorone diisocyanate.

9. The method according to any one of preceding claims, wherein it comprises the step of adjusting pH to be between 5 and 7 and adjusting the viscosity to be less than 250 mPa at 20°C.

10. The method according to any one of the preceding claims, wherein the amine chain extender has a molecular weight of ≤500 g/mol and/or the particle size D90 of the polyurethane dispersion is 160 to 190 nm.

11. The method according to the any one of preceding claims, wherein it comprises the step of adding a non-ionic diol, to the reaction vessel, after the step of introduction of polyester diol.

12. A water-based polyurethane prepared according to the method of any one of preceding claims.

13. The water based-polyurethane according to claim 12, wherein the solid content is between 30% and 50% when measured at 130°C using an IR dryer.

14. Use of the water-based polyurethane according to claims 12 or 13 in a method for digital printing on cotton fabrics.

15. A cotton fabric printed with the water-based polyurethane according to claims 12 or 13.
